# EUROPÄISCHE PATENTSCHRIFT

(11) **EP 2 575 282 B1**
(45) Veröffentlichungstag und Bekanntmachung des Hinweises auf die Patenterteilung: **17.09.2014**
(21) Anmeldenummer: 11183134.3
(22) Anmeldetag: 28.09.2011
(51) Int. Cl.: H04L 1/20, H04L 1/00

(54) **Vorrichtung sowie Verfahren zum Empfangen eines sicheren Telegramms**
Device and method for receiving a secure telegram
Dispositif et procédé de réception d'un télégramme sécurisé

(43) Veröffentlichungstag der Anmeldung: 03.04.2013
(73) Patentinhaber: Siemens Aktiengesellschaft, 80333 München (DE)
(72) Erfinder: Wiesgickl, Bernhard, 92249 Vilseck (DE); Premke, Markus, 93055 Regensburg (DE)

(56) Entgegenhaltungen:
- EP-A1- 1 494 100
- EP-A2- 2 009 834
- DE-A1- 19 951 451

## Beschreibung

Die Erfindung betrifft eine Vorrichtung sowie Verfahren zum Empfangen eines sicheren Telegramms auf einem Kommunikationsbus eines Bussystems. Das Bussystem ist insbesondere ein sicheres Bussystem der industriellen Automatisierungstechnik, wie beispielsweise das PROFIsafe Bussystem oder AS-i Safety at Work Bussystem. Die betrachtete Vorrichtung ist insbesondere ein elektrisches Gerät (Busteilnehmer) des sicheren Bussystems, welches zur Kommunikation mit mindestens einem weiteren Gerät (Busteilnehmer) über einen Kommunikationsbus des Bussystems mit diesem verbindbar ist.

Zur Kommunikation innerhalb eines derartigen Bussystems sind üblicherweise zwei Geräte über den Kommunikationsbus miteinander verbunden. Das jeweilige Gerät weist hierbei ein Kommunikationsmittel auf, mittels welchem es an dem Kommunikationsbus angebunden ist. Über das Kommunikationsmittel des jeweiligen Gerätes können Telegramme zwischen den beteiligten Geräten über den Kommunikationsbus ausgetauscht werden, so dass ein Informationsaustausch zwischen den Geräten erfolgen kann. Die Geräte können folglich über ihr Kommunikationsmittel Telegramme vom Kommunikationsbus empfangen und Telegramme auf den Kommunikationsbus senden.

Zu übertragende Informationen (z.B. Messwerte, Zustände und/oder Parameter) der Geräte werden üblicherweise als Nutzdaten über den Kommunikationsbus übertragen. In Abhängigkeit des verwendeten Bussystems (z.B. PROFIBUS, AS-i Bus) kann je Telegramm eine definierte Anzahl an Bits übertragen werden. Den Geräten steht somit zur Übertragung einer Information je Telegramm eine definierte Anzahl an Bits für die Nutzdaten zur Verfügung. Können mittels eines Telegramms beispielsweise maximal 10 Bit an Nutzdaten übertragen werden und die zu übertragenden Information benötigt 40 Bit an Nutzdaten, so sind mindestens 4 Telegramme zur Übertragung der Information notwendig, da maximal 10 Bit der einen Teil der Information abbildenden Nutzdaten je Telegramm übertragen werden können.

Sofern die Geräte innerhalb der Sicherheitstechnik, insbesondere der industriellen Sicherheitstechnik, eingesetzt werden, müssen die betroffenen Geräte sowie die Kommunikation der Geräte untereinander spezielle Sicherheitsvorschriften erfüllen. Insbesondere muss die Kommunikation der Geräte mittels sicherer Telegramme erfolgen. Sichere Bussysteme setzen üblicherweise auf das jeweilige "Standard" Bussystem auf und sichern die sicher zu übertragenden Nutzdaten z. B. durch eine zyklische Redundanzprüfung ab. Die zyklische Redundanzprüfung (engl. cyclic redundancy check, kurz: CRC) ist ein Verfahren zur Bestimmung eines Prüfwerts für Daten, um Fehler bei der Übertragung erkennen zu können. Hierbei werden innerhalb eines sicheren Telegramms neben den Nutzdaten ferner CRC-Daten übertragen. Mittels der CRC-Daten wird ein CRC-Wert der Nutzdaten des jeweiligen sicheren Telegramms abgebildet. Der CRC-Wert und letztendlich die CRC-Daten werden seitens des zu sendenden Gerätes durch ein CRC-Berechnungsverfahren erzeugt, so dass ein sicheres Telegramm mit Nutzdaten und CRC-Daten gesendete werden kann.

Bei den Ausführungen dieser Anmeldung wird bei einem zu sendenden sicheren Telegramm stets von einer maximal möglichen Anzahl an Nutzdaten je sicheres Telegramm ausgegangen. Es ist selbstverständlich, dass bei einer Übertragung einer gegenüber der maximalen Anzahl der Nutzdaten je sicheres Telegramm geringeren Anzahl an Nutzdaten im sicheren Telegramm eine geringere Anzahl an Bit für CRC-Daten je Telegramm erforderlich ist. In der Beschreibung dieser Anmeldung wird, sofern nicht explizit darauf hingewiesen wird, stets die maximal mögliche Anzahl an Nutzdaten in einem sichern Telegramm betrachtet (insbesondere übertragen oder empfangen).

Wird ein sicheres Telegramm von einer Vorrichtung empfangen, so werden aus dem empfangenen sicheren Telegramm zunächst die Nutzdaten und CRC-Daten ermittelt. Anschließend erfolgt eine CRC-Prüfung, bei welcher ein Abgleich der CRC-Daten mit den Nutzdaten erfolgt. Hierbei werden die Nutzdaten des empfangenen sicheren Telegramms mit dem durch die CRC-Daten abgebildeten CRC-Wert auf ihre Korrektheit überprüft. Mittels der CRC-Prüfung kann somit die ordnungsgemäße Übertragung der Nutzdaten mittels des sicheren Telegramms überprüft werden.

In Abhängigkeit des verwendeten sicheren Bussystems steht der Vorrichtung zur Übertragung der Information je sicheres Telegramm eine definierte Anzahl an Bits für die Nutzdaten und CRC-Daten zur Verfügung. Stehen beispielsweise je Telegramm 20 Bit für die Nutzdaten und CRC-Daten zur Verfügung und zur Abbildung des CRC-Wertes der Nutzdaten eines Telegramms werden 12 Bit an CRC-Daten benötigt, so können je Telegramm lediglich 8 Bit an Nutzdaten sicher übertragen werden.

Die Anzahl der benötigten Bits für die CRC-Daten eines sicheren Telegramms ist abhängig von der Anzahl der zu übertragenden Nutzdaten, der Nutzdatenbreite (Anzahl an Bits für CRC-Daten und Nutzdaten je sicheres Telegramm) des sicheren Telegramms und vom angewendeten CRC-Berechnungsverfahren für die zu übertragenden Nutzdaten des zu sendenden sicheren Telegramms.

Die Nutzdatenbreite eines Bussystems ist üblicherweise fest vorgegeben. Das anzuwendende CRC-Berechnungsverfahren wird somit derzeit auf Basis einer zu erwartende Bitfehlerwahrscheinlichkeit für die Kommunikation über den Kommunikationsbus ermittelt. In Abhängigkeit des vorliegenden Kommunikationsbusses kann durch eine Betrachtung des Kommunikationsbusses die zu erwartende Bitfehlerwahrscheinlichkeit des Kommunikationsbusses berechnet werden. Aus dieser ermittelten zu erwartenden Bitfehlerwahrscheinlichkeit des Kommunikationsbusses ergibt sich eine minimal erforderliche Bitanzahl an CRC-Daten je zu sendendem sicherem Telegramms, um eine sichere Kommunikation über den Kommunikationsbus zu gewährleisten.

Derzeit wird zum Sicherstellen der sicheren Kommunikation auf dem Kommunikationsbus diese ermittelte minimale Bitanzahl an CRC-Daten je zu sendendem sicherem Telegramms herangezogen. Die Kriterien einer sicheren Kommunikation im industriellen Umfeld werden beispielsweise in den Normen IEC 61508 oder ICE 62061 definiert

Das CRC-Berechnungsverfahren von Vorrichtungen, welche sichere Telegramme über den Kommunikationsbus senden können, ist daher üblicherweise derart ausgelegt, dass bei einem zu sendenden sicheren Telegramm aus den Nutzdaten stets so viel CRC-Daten gebildet werden, dass mindestens die minimal erforderliche Bitanzahl an CRC-Daten vorliegt. Auf diese Weise kann bereits durch die damit verbundene CRC-Prüfung sichergestellt werden, dass eine sichere Kommunikation über den Kommunikationsbus erfolgt. Bei der sicheren Kommunikation über den Kommunikationsbus wird somit derzeit das CRC-Berechnungsverfahren lediglich in Abhängigkeit der ermittelten zu erwartenden Bitfehlerwahrscheinlichkeit des Kommunikationsbusses bestimmt. Die Bitanzahl an CRC-Daten zur Übermittlung der Nutzdaten je sicheres Telegramm ist somit derzeit sehr hoch.

Je zu sendendes sicheres Telegramm steht üblicherweise eine feste Nutzdatenbereite (maximale Bitanzahl an Nutzdaten und CRC-Daten je Telegramm)zur Verfügung. Zur Übertragung eines sicheren Telegramms kann folglich eindeutig die Bitanzahl der CRC-Daten zur Übertragung der maximalen Anzahl an Nutzdaten des sicheren Telegramms bestimmt werden. Im Fall von AS-i Safety at Work liegt eine Bitfehlerwahrscheinlichkeit des Kommunikationsbusses von 3*10⁻³ vor und die Nutzdatenbreite je sicheres Telegramm beträgt 16 Bit. Es können somit derzeit maximal 4 Bit Nutzdaten je sicheres Telegramm übertragen werden, welche mit 12 Bit CRC-Daten "gesichert" werden. Die minimal erforderliche Bitanzahl an CRC-Daten beträgt bei AS-i Safety at Work somit 12 Bit.

Im Fall von PROFIsafe liegt eine Bitfehlerwahrscheinlichkeit des Kommunikationsbusses von 1*10⁻² vor. Liegt die Nutzdatenbreite von 3 Byte für ein sicheres Telegramm vor, so beträgt die minimal erforderliche Anzahl an CRC-Daten 3 Byte. Liegt die Nutzdatenbreite von 123 Byte für ein sicheres Telegramm vor, so beträgt die minimal erforderliche Anzahl an CRC-Daten 4 Byte.

Aus EP 2 009 834 A2 ist ein adaptiver Fehlerzähler für drahtlose Feldgeräte bekannt. Das Feldgerät ermittelt die Anzahl der fehlerhaft empfangenen Datenpakete und löst hierauf einen Alarm aus oder setzt eine Fehlermeldung ab. Ein empfangenes Datenpaket ist fehlerhaft, wenn ein Anfrage- oder Antworttelegram unvollständig ist oder ein Antworttelegramm vollständig ausbleibt.

Eine Aufgabe der vorliegenden Erfindung ist es, die Kommunikation innerhalb eines sicheren Bussystems zu verbessern. Insbesondere soll das Übertragen von Nutzdaten verbessert werden. Hierbei soll vorzugsweise trotz Einhaltung der geltenden Sicherheitsvorschrift/-en des sicheren Bussystems ein beschleunigtes Übertragen von als Nutzdaten zu übertragende Informationen ermöglicht werden. Das sichere Bussystem ist vorzugsweise ein sicheres industrielles Bussystem.

Diese Aufgaben werden gelöst durch eine Vorrichtung gemäß Anspruch 1 und ein Verfahren gemäß Anspruch 4.

Vorteilhafte Weiterbildungen der Erfindung sind in den abhängigen Ansprüchen 2, 3 und 5 angegeben.

Ein sicheres Telegramm unterscheidet sich von einem nichtsicheren Telegramm darin, dass bei dem sicheren Telegramm zusätzlich zu den Nutzdaten CRC-Daten innerhalb des Telegramms übertragen werden. Die CRC-Daten geben einen CRC-Wert der Nutzdaten des sicheren Telegramms wieder.

Mittels der CRC-Prüfung erfolgt ein Abgleich der empfangenen Nutzdaten mit dem zugehörigen CRC-Wert der CRC-Daten, welche je sicheres Telegramm mit den Nutzdaten übermittelt werden. Die Vorrichtung kann folglich durch diesen Abgleich erkennen, ob eine fehlerhafte Übertragung der Nutzdaten vorliegt oder nicht. Fehler bei der Übertragung der Nutzdaten mittels eines Telegramms können beispielsweise durch Rauschen auf der Leitung des Kommunikationsbusses verursacht werden.

Mittels einer Auswertung der CRC-Prüfung der empfangenen Telegramme kann eine Fehlerrate hinsichtlich der empfangenen Telegramme ermittelt werden. Wird mittels der CRC-Prüfung eine fehlerhafte Übertragung der Nutzdaten erkannt, so erhöht sich die Fehlerrate. Die vorliegende Fehlerrate kann beispielsweise mittels eines Fehlerzählers, einer Auswertung der ermittelten Fehler über die Zeit oder einer Auswertung der Anzahl der empfangnen sicheren Telegramme gegenüber den fehlerhaften Telegrammen bestimmt werden.

In Auswerteeinheit der Vorrichtung ist ein Schwellwert zu dieser Fehlerrate hinterlegt. Der Schwellwert ist vorzugsweise derart ausgebildet, dass er den Übergang zwischen dem sicheren Kommunikationsbereich, in welchem von einer sicheren Kommunikation auf dem Kommunikationsbus gesprochen werden kann, zu dem nicht sicheren Kommunikationsbereich, in welchem von keiner sicheren Kommunikation auf dem Kommunikationsbus gesprochen werden kann, charakterisiert. Die Ermittlung der Bereiche und somit die Bestimmung des Schwellwertes der Fehlerrate erfolgt vorzugsweise unter Berücksichtigung der Sicherheitsvorschriften des jeweiligen Kommunikationssystems. Liegt die ermittelte Fehlerrate folglich unterhalb des Schwellwertes so liegt eine sichere Kommunikation vor. Liegt die ermittelte Fehlerrate oberhalb des Schwellwertes so liegt keine sichere Kommunikation vor.

Wird durch die CRC-Prüfung ein Fehler bei der Übermittlung eines sicheren Telegramms erkannt und wird durch die daraus resultierende Erhöhung der Fehlerrate der Schwellwert nicht überschritten, so wird das sichere Telegramm verworfen und es erfolgt keine Weiterverarbeitung der Nutzdaten des fehlerhaften sicheren Telegramms. Wird nach der CRC-Prüfung durch die daraus resultierende Erhöhung der Fehlerrate hingegen der Schwellwert überschritten, so wird ein sicherer Zustand der Vorrichtung herbeigeführt. Der sichere Zustand der Vorrichtung liegt insbesondere dann vor, wenn durch die Vorrichtung keine Gefährdung ausgeht. Hierfür wird z.B. ein durch die Vorrichtung gesteuerter Verbraucher, welcher im aktiven Betrieb eine Gefährdung darstellt, abgeschaltet.

Dadurch, dass bei der sicheren Kommunikation über den Kommunikationsbus durch die Vorrichtung eine zusätzliche Fehlerauswertung hinsichtlich der Kommunikation über den Kommunikationsbus erfolgt, kann das CRC-Berechnungsverfahren für den CRC-Wert der Nutzdaten "unschärfer" ausgebildet werden. Die erforderliche Anzahl an CRC-Daten zur Übertragung von Nutzdaten mittels eines sicheren Telegramms kann somit gegenüber der erforderlichen Anzahl mit dem derzeitigen Berechnungsverfahren lediglich auf Basis der Bitfehlerwahrscheinlichkeit des Kommunikationsbusses reduziert werden. Es können somit mehr Nutzdaten je sicheres Telegramm übermittelt werden und gleichzeitig können die geltenden Sicherheitsvorschriften eingehalten werden. Es kann somit gegenüber den derzeitigen Systemen ein erhöhter Datendurchsatz an Nutzdaten erfolgen.

Es ist nach den geltenden Sicherheitsnormen zulässig eine niedrigere Fehleraufdeckung und somit eine geringere Bitanzahl an CRC-Daten je zu sendendes sicheres Telegramm zu verwenden, wenn zusätzliche Maßnahmen getroffen werden. Die Ermittlung der Fehlerrate und der Abgleich der vorliegenden Fehlerrate mit dem hinterlegten Schwellwert der Fehlerrate durch die Auswerteeinheit dient diesem Zweck, so dass zur sicheren Kommunikation auf dem Kommunikationsbus ein CRC-Berechnungsverfahren angewandt werden kann, bei welchem die Bitanzahl an CRC-Daten eines zu sendenden sicheren Telegramms mit maximaler Nutzdatenanzahl geringer ist als bei den herkömmlichen Systemen, welche das CRC-Berechnungsverfahren anhand der ermittelten berechneten Bitfehlerwahrscheinlichkeit des verwendeten Kommunikationsbusses bestimmen.

Auf diese Weise kann unter Einhaltung der geltenden Sicherheitsvorschriften je zu übertragendes sicheres Telegramm eine größere Anzahl an Nutzdaten übertragen werden.

In einer vorteilhaften Ausführungsform der Erfindung kann die Vorrichtung sichere Telegramme über den Kommunikationsbus senden, wobei die Vorrichtung mittels eines in der Vorrichtung hinterlegten CRC-Berechnungsverfahrens aus Nutzdaten eines zu sendenden sicheren Telegramms zugehörige CRC-Daten des zu sendenden sicheren Telegramms bilden kann, wobei in Abhängigkeit des verwendeten Kommunikationsbusses eine zu erwartende Bitfehlerwahrscheinlichkeit für die Kommunikation über den Kommunikationsbus berechenbar ist, wobei sich lediglich unter Berücksichtigung der berechneten zu erwartende Bitfehlerwahrscheinlichkeit des verwendeten Kommunikationsbusses eine minimal erforderliche Bitanzahl an CRC-Daten je zu sendendem sicherem Telegramm ergibt, um eine sichere Kommunikation über den Kommunikationsbus zu gewährleisten, wobei das in der Vorrichtung hinterlegte CRC-Berechnungsverfahren derart ausgebildet ist, dass für ein zu sendendes Telegramm die Bitanzahl an CRC-Daten größer als die Hälfte der minimal erforderlichen Bitanzahl und geringer als die minimal erforderliche Bitanzahl ist.

Die Bitfehlerwahrscheinlichkeit (engl.: bit error probability, BEP) beschreibt eine durch theoretische Überlegungen berechnete Wahrscheinlichkeit für das Auftreten eines Bitfehlers. Geschlossene Berechnungen von Bitfehlerwahrscheinlichkeiten sind meist nur für idealisierte Szenarien möglich, werden aber häufig verwendet, um aufwendige Simulationen zu ersetzen und Grenzen der Leistungsfähigkeit von nachrichtentechnischen Systemen zu bestimmen.

Jedes Standardbussystem implementiert Sicherheitsmechanismen, um die Qualität der Daten zu gewährleisten (z.B. AS-i Safety at Work oder PROFIsafe). Diese Sicherheitsmechanismen bestehen in dem angewendeten CRC-Berechnungsverfahren. Das CRC-Berechnungsverfahren bei diesen Systemen wird derzeit lediglich auf Basis der berechneten zu erwartende Bitfehlerwahrscheinlichkeiten des entsprechenden Kommunikationsbusses bestimmt. Hierbei wurde mittels der theoretisch ermittelten zu erwartenden Bitfehlerwahrscheinlichkeit des verwendeten Kommunikationsbusses die minimal erforderliche Bitanzahl an CRC-Daten für ein zu sendendes sicheres Telegramm mit einer maximalen Anzahl an Nutzdaten bestimmt. Das CRC-Berechnungsverfahren innerhalb des Bussystems wurde somit derart ausgebildet, dass der CRC-Wert eines zu sendenden sicheren Telegramms mindestens die minimal erforderliche Bitanzahl an CRC-Daten aufweist. Da durch eine Anwendung eines CRC-Berechnungsverfahrens, bei welchem mindestens die auf Basis der Bitfehlerwahrscheinlichkeiten des entsprechenden Kommunikationsbusses bestimmte minimale Anzahl an CRC-Daten je sicheres Telegramm gebildet werden, die geltenden Sicherheitsvorschriften erfüllt werden, sind zum Gewährleisten einer sicheren Kommunikation innerhalb des Kommunikationsbusses keine weitere Auswertungen notwendig.

Bei AS-i Safety at Work wären zur Übertragung eines sicheren Telegramms mit einer maximalen Anzahl an Nutzdaten 12 Bit an CRC-Daten notwendig. Die minimal erforderliche Bitanzahl an CRC-Daten beträgt bei AS-i Safety at Work somit 12 Bit.

Mittels der zusätzlichen Auswertung der ermittelten Fehlerrate und dem Abgleich der vorliegenden Fehlerrate mit dem Schwellwert, kann hingegen je sicheres Telegramm die zur Verfügung stehende Bitanzahl an Nutzdaten erhöht werden. Dank der Ermittlung der Fehlerrate kann das CRC-Berechnungsverfahren somit derart angepasst werden, dass trotz Einhaltung der Sicherheitsvorschriften eine möglichst große Anzahl an Bits an Nutzdaten je sicheres Telegramm übertragen werden können.

In einer weiteren vorteilhaften Ausführungsform der Erfindung ist die Vorrichtung ein elektrisches Gerät innerhalb der industriellen Automatisierungstechnik und die sicheren Telegramme sind PROFIsafe oder AS-i Safety at Work Telegramme. Das elektrische Gerät überwacht, schützt und/oder schaltet vorzugsweise einen Elektromotor.

In einer weiteren vorteilhaften Ausführungsform der Erfindung können die beiden Vorrichtungen sichere Telegramme über den Kommunikationsbus untereinander austauschen. Beide Vorrichtungen können vorzugsweise anhand der empfangenen Telegramme jeweils eine Fehlerrate ermitteln.

Im Folgenden werden die Erfindung und Ausgestaltungen der Erfindung anhand der in den Figuren dargestellten Ausführungsbeispiele näher beschrieben und erläutert. Es zeigen:
- FIG 1: eine schematische Darstellung eines sicheren Bussystems mit einer ersten Vorrichtung als Master, einer zweiten Vorrichtung als Slave und einem Kommunikationsbus, und
- FIG 2: eine schematische Darstellung eines möglichen Ablaufs einer Auswertung eines sicheren Telegramms durch die zweite Vorrichtungen aus FIG 1.

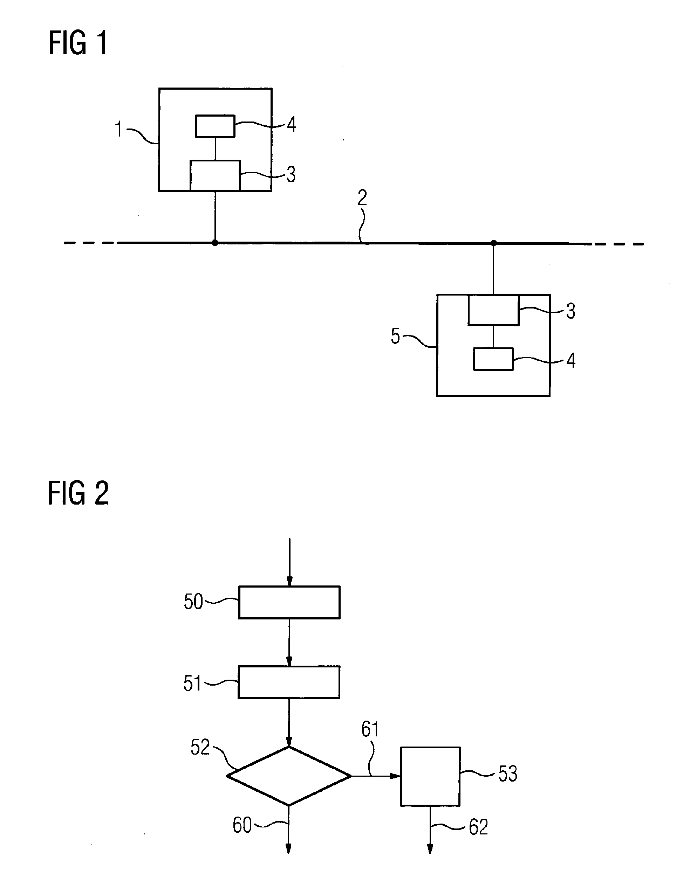

FIG 1 zeigt eine schematische Darstellung eines sicheren Bussystems mit einer ersten Vorrichtung 1 als Master, einer zweiten Vorrichtung 5 als Slave und einem Kommunikationsbus 2. Das betrachtete Bussystem ist ein Bussystem im Bereich der industriellen Automatisierungstechnik, in diesem Beispiel ein AS-i Safety at Work Bussystem. Die erste Vorrichtung 1 als Master kann die Kommunikation innerhalb des AS-i Safety at Work Bussystems steuern. Die erste Vorrichtung 1 kann sichere Telegramme über den Kommunikationsbus 2 senden und gezielt die zweite Vorrichtung 5 adressieren. Die zweite Vorrichtung 5 kann das an sie adressierte sichere Telegramm empfangen und hierauf ein sicheres Telegramm an die erste Vorrichtung 1 sendet. Die erste Vorrichtung 1 kann dieses sichere Telegramm wiederum empfangen. Die beiden Vorrichtungen 1,5 können folglich miteinander kommunizieren. Sowohl das gesendete als auch das empfangene sichere Telegramm umfasst Nutzdaten sowie CRC-Daten.

Sowohl die erste als auch die zweite Vorrichtung 1,5 kann über ihr Kommunikationsmittel 3 ein sicheres Telegramm auf den Kommunikationsbus 2 senden und ein sicheres Telegramm vom Kommunikationsbus 2 empfangen. Das jeweilige Kommunikationsmittel 3 ist jeweils mit einer Auswerteeinheit 4 verbunden, mittels welcher eine CRC-Berechnung für zu sendende sichere Telegramme und eine Auswertung, insbesondere eine CRC-Prüfung, der empfangenen sicheren Telegramme erfolgen kann.

Die CRC-Daten des sicheren Telegramms definieren einen CRC-Wert der im gleichen sicheren Telegramm übermittelten Nutzdaten. Mittels dieses CRC-Wertes kann durch die Vorrichtung 1,5, welche das sichere Telegramm empfängt, mittels der CRC-Prüfung überprüft werden, ob die über das sichere Telegramm gesendeten Nutzdaten ordnungsgemäß innerhalb der Vorrichtung angekommen sind, oder nicht. Diese CRC-Prüfung erfolgt in der Auswerteeinheit 4 der jeweiligen Vorrichtung 1,5.

Ferner kann durch die jeweilige Auswerteeinheit 4 eine Fehlerrate, welche den fehlerhaften Empfang von Nutzdaten empfangener sicherer Telegramme charakterisiert, ermittelt werden (aktuell vorliegende Fehlerrate). Die jeweilige Auswerteeinheit 4 der Vorrichtungen 1,5 ermittelt somit aus den empfangenden Telegrammen fortlaufend eine aktuell vorliegende Fehlerrate. Die Fehlerrate wird beispielsweise durch einen Fehlerzähler gebildet. Die Fehlerrate erhöht sich, wenn die CRC-Prüfung einen Fehler bei den Nutzdaten eines empfangnen sicheren Telegramms detektiert.

Mittels der Fehlerrate wird folglich die Häufigkeit an Fehlern hinsichtlich der empfangenen sicheren Telegramme widergespiegelt. Bei einer hohen Fehlerrate sind gegenüber einer niedrigen Fehlerrate mehr Fehler bei der CRC-Prüfung seitens der Auswerteeinheit 4 detektiert worden.

In der jeweiligen Auswerteeinheit 4 ist ferner ein Schwellwert für die Fehlerrate hinterlegt. Dieser Schwellwert der Fehlerrate kennzeichnet den Bereich, ab welchem eine sichere Kommunikation vorliegt bzw. nicht mehr vorliegt. Wird der Schwellwert der Fehlerrate durch die aktuell vorliegende ermittelte Fehlerrate der Vorrichtung überschritten, so ist davon auszugehen, dass keine sichere Kommunikation vorliegt. Wird der Schwellwert der Fehlerrate durch die aktuell vorliegende ermittelte Fehlerrate der Vorrichtung unterschritten, so ist davon auszugehen, dass eine sichere Kommunikation vorliegt. Wird folglich der Schwellwert überschritten, so wird durch die Auswerteeinheit ein Signal ausgegeben, so dass durch die Vorrichtung ein sicherer Zustand der Vorrichtung herbeigeführt werden kann. Mittels des in der Auswerteeinheit 4 hinterlegten Schwellwerts der Fehlerrate wird somit kontrolliert ob eine sichere Kommunikation auf dem Kommunikationsbus vorliegt oder nicht.

Die logische Verarbeitung innerhalb der jeweiligen Auswerteeinheit 4 erfolgt insbesondere mittels eines Mikrocontrollers.

Durch diese zusätzliche Auswertung der sicheren Kommunikation innerhalb eines Bussystems ist es bei Einhaltung der geltenden Sicherheitsvorschriften möglich das CRC-Berechnungsverfahren "abzuschwächen", so dass weniger CRC-Daten erforderlich sind. Im Vergleich zu den herkömmlichen Systemen (bei welchen die Ermittlung des CRC-Berechnungsverfahrens lediglich auf Basis der Wahrscheinlichkeit des Kommunikationsbusses erfolgt) werden folglich zum Abbilden eines CRC-Wertes von Nutzdaten weniger CRC-Daten benötigt als bei dem herkömmlichen CRC-Berechnungsverfahren. Da die Nutzdatenbreite eines sicheren Telegramms fest vorgeben ist, können somit mehr Nutzdaten je sicheres Telegramm übertragen werden. Bei einem zu sendenden Telegramm kann folglich eine größere Bitanzahl an Nutzdaten mit einer geringeren Bitanzahl an CRC-Daten übertragen werden als bei den herkömmlichen sicheren Telegrammen und dennoch können die Anforderungen der geltenden Sicherheitsnormen eingehalten werden, da eine zusätzliche Auswertung der Kommunikation mittels des Abgleichs der vorliegenden Fehlerrate mit dem Schwellwert der Fehlerrate erfolgt.

Zum Senden einer zu übertragenden Information von der ersten Vorrichtung 1 an die zweite Vorrichtung 5 (oder umgekehrt) wird die zu übertragende Information als Nutzdaten abgebildet. In Abhängigkeit der zu übertragenden Information wird hierfür eine bestimmte Anzahl an Bits an Nutzdaten benötigt. Da innerhalb des AS-i Safety at Work Bussystems je Telegramm lediglich eine bestimmte Datenbreite für die Nutzdaten und CRC-Daten zur Verfügung steht sind zur Übertragung einer Information ggf. mehrere Telegramme erforderlich. Bei AS-i Safety at Work liegt eine Datenbreite von 16 Bit für die Nutzdaten und CRC-Daten vor. Je Telegramm können somit lediglich 16 Bit an Nutzdaten und CRC-Daten übertragen werden. Wird zur Erfüllung der geltenden Sicherheitsvorschriften das CRC-Berechnungsverfahren lediglich auf Basis einer berechneten zu erwartende Bitfehlerwahrscheinlichkeit des verwendeten AS-i Kommunikationsbusses ausgelegt, so ergibt sich eine minimal erforderliche Bitanzahl an CRC-Daten für ein zu sendendes sicheres Telegramm. Diese minimale Bitanzahl an CRC-Daten beträgt 12 Bit. Hierbei handelt es sich um die minimal erforderliche Bitanzahl an CRC-Daten je zu sendendes sicheres Telegramm, um eine sichere Kommunikation über den Kommunikationsbus zu gewährleisten. Zur sicheren Übertragung von 4 Bit Nutzdaten ist somit ein CRC-Wert erforderlich, welcher 12 Bit an CRC-Daten benötigt. Der CRC-Wert der im sicheren Telegramm übertragenen Nutzdaten wird durch die gleichzeitig mit dem sicheren Telegramm übertragenen 12 Bit CRC-Daten vollständig abgebildet. Zur sicheren Übertragung von Informationen können somit je sicheres Telegramm lediglich 4 Bit an Nutzdaten übertragen werden.

Innerhalb von AS-i Safety at Work ist es zulässig die mittels der Bitfehlerwahrscheinlichkeit ermittelte minimal erforderliche Bitanzahl an CRC-Daten je zu sendendem sicherem Telegramm zu unterschreiten, wenn zusätzliche Sicherheitsmechanismen eingesetzt werden. Dies erfolgt mittels des Abgleichs des Schwellwertes mit der vorliegenden Fehlerrate der empfangenen sicheren Telegramme.

Vorzugsweise wird ein CRC-Berechnungsverfahren angewendet, bei welchem für ein zu sendendes Telegramm die Bitanzahl an CRC-Daten vorzugsweise größer als die Hälfte der minimal erforderlichen Bitanzahl und geringer als die minimal erforderliche Bitanzahl ist. Da mittels der CRC-Prüfung der empfangenden sicheren Telegramme fehlerhafte Bits in den Nutzdaten mit einer sehr hohen Wahrscheinlichkeit aufgedeckt werden können, kann die Auswerteinheit 4 die vorliegende Fehlerrate ausreichend (gemäß den geltenden Sicherheitsvorschriften) bestimmen. Dadurch, dass die Auswerteeinheit 4 eine vorliegende Fehlerrate ausreichend ermitteln kann, kann eine Anpassung des CRC-Berechnungsverfahren bei gleichzeitiger Einhaltung der Sicherheitsvorschriften erfolgen, wenn zusätzlich die Fehlerrate berücksichtigt wird. Dies erfolgt mittels des Schwellwertes.

Es kann somit beispielsweise bei AS-i Safety at Work ein CRC-Berechnungsverfahren angewandt werden, bei welchem zum Senden eines sicheren Telegramms lediglich 8 Bit an CRC-Daten erforderlich sind um 8 Bit an Nutzdaten sicher zu übertragen. Der CRC-Wert der im sicheren Telegramm übertragenen Nutzdaten wird durch die gleichzeitig mit dem sicheren Telegramm übertragenen CRC-Daten vollständig abgebildet. Durch eine entsprechende Auslegung des angewandten Schwellwerts kann die Änderung des CRC-Berechnungsverfahrens kompensiert werden, so dass dennoch die Anforderungen an die Sicherheitstechnik erfüllt werden.

Ebenso kann beispielsweise bei AS-i Safety at Work ein CRC-Berechnungsverfahren angewandt werden, bei welchem zum Senden eines sicheren Telegramms lediglich 6 Bit an CRC-Daten erforderlich sind um 10 Bit an Nutzdaten sicher zu übertragen. Der CRC-Wert der im sicheren Telegramm übertragenen Nutzdaten wird durch die gleichzeitig mit dem sicheren Telegramm übertragenen CRC-Daten vollständig abgebildet. Durch eine entsprechende Auslegung des angewandten Schwellwerts kann die Änderung des CRC-Berechnungsverfahrens kompensiert werden, so dass dennoch die Anforderungen an die Sicherheitstechnik erfüllt werden.

Durch das Absenken des Schwellwertes bei der Fehlerrate kann somit eine geringere Bitanzahl an CRC-Daten je sicheres Telegramm angesetzt werden.

Wird beispielsweise ein sicheres Telegramm von der ersten Vorrichtung 1 an die zweite Vorrichtung 2 gesandt, so wird zunächst durch das in der Auswerteeinheit 4 der ersten Vorrichtung 1 fest hinterlegte CRC-Berechnungsverfahren für die innerhalb des sicheren Telegramms zu übertragenden Nutzdaten ein CRC-Wert berechnet. Dieser CRC-Wert wird durch CRC-Daten abgebildet, welche mit den zu übertragenden Nutzdaten im selben sicheren Telegramm auf den Kommunikationsbus 2 gesandt wird. Die zweite Vorrichtung 5 kann mittels ihres Kommunikationsmittels 3 das sichere Telegramm empfangen. Der Ablauf einer folgenden Analyse eines empfangenen sicheren Telegramms durch die zweite Vorrichtung 5 ist in der Figur 2 schematisch dargestellt.

FIG 2 zeigt eine schematische Darstellung eines möglichen Ablaufs einer Auswertung eines sicheren Telegramms durch die zweite Vorrichtungen 5 aus Figur 1. Seitens der ersten Vorrichtung wird zunächst ein sicheres Telegramm über den Kommunikationsbus an die zweite Vorrichtung gesandt.

In einem ersten Schritt 50 wird dieses sichere Telegramm mittels des Kommunikationsmittels der zweiten Vorrichtung vom Kommunikationsbus empfangen, so dass der zweiten Vorrichtung das sichere Telegramm vorliegt.

In einem darauffolgenden zweiten Schritt 51 wird das empfangene sichere Telegramm decodiert und gegebenenfalls mittels Fehlerschutzmechanismen korrigiert, so dass dem Kommunikationsmittel die Nutzdaten und CRC-Daten vorliegen.

In einem darauffolgenden dritten Schritt 52 werden die Nutzdaten und CRC-Daten des decodierten empfangenen sicheren Telegramms durch das Kommunikationsmittel an die Auswerteeinheit weitergereicht. Innerhalb der Auswerteeinheit findet nun die CRC-Prüfung statt. Hierbei wird der CRC-Wert, welcher durch die CRC-Daten des empfangenen Telegramms wiedergegeben wird, mit den Nutzdaten des empfangenen Telegramms abgeglichen. Die Auswerteeinheit kann folglich erkennen, ob die Übertragung der Nutzdaten von der ersten Vorrichtung an die zweite Vorrichtung fehlerfrei ist oder nicht.

Stimmen die empfangenen Nutzdaten mit dem CRC-Wert der empfangenen CRC-Daten überein, d.h. die Übertragung der Nutzdaten war ordnungsgemäß, so werden die Nutzdaten zu weiteren Verarbeitung weitergereicht. Dies ist mit dem Pfeil 60 dargestellt.

Stimmen die empfangenen Nutzdaten nicht mit dem CRC-Wert überein, so werden die empfangenden Nutzdaten des sicheren Telegramms verworfen. Ferner wird die Auswerteeinheit über eine fehlerhafte Übertragung von Nutzdaten informiert. Dies ist mit dem Pfeil 61 dargestellt.

Liegt eine fehlerhafte Übertragung der Nutzdaten vor so folgt ein vierter Schritt 53. Da eine fehlerhafte Übertragung vorliegt, wird die Auswerteeinheit über den Fehler informiert. Innerhalb der Auswerteeinheit wird somit die Fehlerrate, welche den fehlerhaften Empfang von Nutzdaten empfangener sicherer Telegramme charakterisiert, aktualisiert (erhöht). Nun erfolgt ein Vergleich der aktualisierten vorliegenden Fehlerrate mit dem hinterlegten Schwellwert der Fehlerrate. Wird der Schwellwert unterschritten, so erfolgt keine weitere Maßnahme. Wird jedoch der Schwellwert durch die aktualisierte vorliegende Fehlerrate überschritten, so wird ein sicherer Zustand der Vorrichtung herbeiführt. Dies ist mit Pfeil 62 dargestellt.

Die Ermittlung der Fehlerrate erfolgt nach der CRC-Prüfung der Nutzdaten der empfangenen Telegramme. Die vorliegende Fehlerrate kann unterschiedlich berechnet werden. Denkbar sind insbesondere Auswertungen der fehlerhaften Nutzdaten über deren Anzahl, im Verhältnis zur die Anzahl der empfangenen Telegramme oder zur Anzahl der ordnungsgemäß empfangenen Telegramme.

Die Fehlerrate wird vorzugsweise in vorgegebenen Abständen zurückgesetzt, so dass die Fehlerzählung von neuen begonnen wird. Eine neue Ermittlung der vorliegenden Fehlerrate kann beispielsweise nach einem bestimmten Zeitabstand, einer bestimmten Anzahl an sicheren Telegrammen, einer bestimmten Anzahl an ordnungsgemäß empfangenen Nutzdaten, etc. erfolgen.

## Patentansprüche

1. Vorrichtung (1,5) zum Senden und Empfangen eines sicheren Telegramms, mit einem Kommunikationsmittel (3) und einer Auswerteeinheit (4), wobei ein sicheres Telegramm jeweils Nutzdaten und CRC-Daten umfasst, wobei die Auswerteeinheit (4) aus empfangenen sicheren Telegrammen eine Fehlerrate mittels einer CRC-Prüfung ermitteln kann und bei einem Überschreiten eines in der Auswerteeinheit (4) hinterlegten Schwellwertes der Fehlerrate einen sicheren Zustand der Vorrichtung (1,5) herbeiführen kann,
wobei die Vorrichtung (1.5) mittels eines in der Vorrichtung (1.5) hinterlegten CRC-Berechnungsverfahrens aus Nutzdaten eines zu sendenden sicheren Telegramms zugehörige CRC-Daten des zu sendenden sicheren Telegramms biden kann.
**dadurch gekennzeichnet, dass** das Kommunikationsmittel (3) an einem Kommunikationsbus (2) anbindbar ist und sichere Telegramme über den Kommunikationsbus (2) empfangen kann und die Vorrichtung (1,5) sichere Telegramme über den Kommunikationsbus (2) senden kann, wobei in Abhängigkeit des verwendeten Kommunikationsbusses (2) eine zu erwartende Bitfehlerwahrscheinlichkeit für die Kommunikation über den Kommunikationsbus (2) berechnet wird, wobei sich lediglich unter Berücksichtigung der berechneten zu erwartende Bitfehlerwahrscheinlichkeit des verwendeten Kommunikationsbusses (2) eine minimal erforderliche Bitanzahl an CRC-Daten je zu sendendem sicherem Telegramm ergibt, um eine sichere Kommunikation über den Kommunikationsbus zu gewährleisten, wobei das in der Vorrichtung (1,5) hinterlegte CRC-Berechnungsverfahren derart ausgebildet ist, dass für ein zu sendendes Telegramm die Bitanzahl an CRC-Daten größer als die Hälfte der minimal erforderlichen Bitanzahl und geringer als die minimal erforderliche Bitanzahl ist.

2. Vorrichtung (1,5) nach einem der vorhergehenden Ansprüche, wobei die Vorrichtung (1,5) ein elektrisches Gerät innerhalb der industriellen Automatisierungstechnik ist und die sicheren Telegramme PROFIsafe oder AS-i Safety at Work Telegramme sind.

3. Bussystem mit einem Kommunikationsbus (2) und zwei Vorrichtungen (1,5) nach Anspruch 1 oder 2, wobei die beiden Vorrichtungen (1,5) sichere Telegramme über den Kommunikationsbus (1,5) untereinander austauschen können.

4. Verfahren zum Senden und Empfangen eines sicheren Telegramms innerhalb eines Bussystems wobei ein sicheres Telegramm jeweils Nutzdaten und CRC-Daten umfasst, wobei eine am Bussystem angeschlossene Vorrichtung (1,5) aus ihren empfangenen sicheren Telegrammen eine Fehlerrate mittels einer CRC-Prüfung ermittelt, wobei bei einem Überschreiten eines in der Vorrichtung (1,5) hinterlegten Schwellwertes der Fehlerrate ein sicherer Zustand der Vorrichtung (1,5) herbeigeführt wird, wobei in Abhängigkeit des verwendeten Kommunikationsbusses (2) eine zu erwartende Bitfehlerwahrscheinlichkeit für die Kommunikation über den Kommunikationsbus (2) berechnet wird, wobei sich lediglich unter Berücksichtigung der berechneten zu erwartende Bitfehlerwahrscheinlichkeit des verwendeten Kommunikationsbusses (2) eine minimal erforderliche Bitanzahl an CRC-Daten je zu sendendem sicherem Telegramm ergibt, um eine sichere Kommunikation über den Kommunikationsbus zu gewährleisten,
**dadurch gekennzeichnet, dass** in der Vorrichtung (1,5) ein CRC-Berechnungsverfahren hinterlegt ist, bei welchem die Bitanzahl an CRC-Daten für ein zu sendendes Telegramm größer als die Hälfte der minimal erforderlichen Bitanzahl und geringer als die minimal erforderliche Bitanzahl ist.

5. Verfahren nach Anspruch 4, wobei ein empfangenes und gesendetes Telegramm jeweils für die Nutzdaten und CRC-Daten zusammen eine feste Anzahl an Bits bereitstellt.

## Claims

1. Apparatus (1, 5) for sending and receiving a secure telegram, having a communication means (3) and an evaluation unit (4), wherein a secure telegram includes user data and CRC data in each instance, wherein the evaluation unit (4) can determine an error rate by means of a CRC check from received secure telegrams and when a threshold value of the error rate stored in the evaluation unit (4) is exceeded, can effect a secure state of the apparatus (1, 5), wherein the apparatus (1, 5) can form associated CRC data of the secure telegram to be sent by means of a CRC calculation method stored in the apparatus (1, 5) comprising user data of a secure telegram to be sent,
**characterised in that** the communication means (3) can be linked to a communication bus (2) and can receive secure telegrams by way of the communication bus (2) and the apparatus (1, 5) can send secure telegrams by way of the communication bus (2), wherein a bit error probability to be expected for the communication by way of the communication bus (2) is calculated as a function of the communication bus (2) used, wherein a minimal bit quantity of CRC data required per secure telegram to be sent results only by taking the calculated bit error probability to be expected of the communication bus (2) used into account, in order to ensure a secure communication via the communication bus, wherein the CRC calculation method stored in the apparatus (1, 5) is embodied such that for a telegram to be sent, the bit quantity of CRC data is greater than half of the minimal bit quantity required and lower than the minimal bit quantity required.

2. Apparatus (1, 5) according to one of the preceding claims, wherein the apparatus (1, 5) is an electrical device within industrial automation technology and the secure telegrams are PROFIsafe or AS-i Safety at Work telegrams.

3. Bus system having a communication bus (2) and two apparatuses (1, 5) according to claim 1 or 2, wherein the two apparatuses (1, 5) can exchange secure telegrams with one another by way of the communication bus (1, 5).

4. Method for sending and receiving a secure telegram within a bus system, wherein a secure telegram includes user data and CRC data in each instance, wherein an apparatus (1, 5) connected to the bus system determines an error rate from its received secure telegrams by means of a CRC check, wherein if a threshold value of the error rate stored in the apparatus (1, 5) is exceeded, a secure state of the apparatus (1, 5) is effected, wherein a bit error probability to be expected for the communication by way of the communication bus (2) is calculated as a function of the communication bus (2) used, wherein a minimal bit quantity of CRC data required per secure telegram to be sent only results by taking the calculated bit error probability expected of the communication bus (2) used into consideration, in order to ensure a secure communication by way of the communication bus, **characterised in that** a CRC calculation method is stored in the apparatus (1, 5), with which the bit quantity of CRC data for a telegram to be sent is greater than half of the minimal bit quantity required and lower than the minimal bit quantity required.

5. Method according to claim 4, wherein a received and sent telegram together provides a fixed number of bits for the user data and CRC data in each instance.

## Revendications

1. Dispositif (1, 5) d'émission et de réception d'un télégramme sécurisé, comprenant un moyen (3) de communication et une unité ( 4 ) d'exploitation, un télégramme sécurisé comprenant respectivement des données utiles et des données CRC, l'unité ( 4 ) d'exploitation pouvant déterminer, au moyen d'un contrôle CRC, un taux d'erreur dans des télégrammes sécurisés reçus et, si une valeur de seuil du taux d'erreur mémorisée dans l'unité (4) d'exploitation est dépassée, pouvant mettre le dispositif ( 1, 5 ) dans un état sécurisé, le dispositif ( 1, 5 ) pouvant, au moyen d'un procédé de calcul CRC mémorisé dans le dispositif ( 1, 5 ), former à partir de données utiles d'un télégramme sécurisé à envoyer des données CRC associées du télégramme sécurisé à envoyer,
**caractérisé en ce que**
le moyen ( 3 ) de communication peut être relié à un bus de communication et peut recevoir des télégrammes sécurisés par le bus ( 2 ) de communication et le dispositif ( 1, 5 ) peut émettre des télégrammes sécurisés par le bus (2) de communication, dans lequel, en fonction du bus ( 2 ) de communication utilisé, une probabilité d'erreur de bits à attendre pour la communication par le bus ( 2 ) de communication est calculée, dans lequel il est obtenu, simplement en tenant compte de la probabilité d'erreur de bits à attendre du bus ( 2 ) de communication utilisé, un nombre de bits nécessaire minimum sur les données CRC pour chaque télégramme sécurisé à envoyer afin d'assurer une communication sécurisée par le bus de communication, le procédé de calcul CRC mémorisé dans le dispositif ( 1, 5 ) étant tel que, pour un télégramme à envoyer, le nombre de bits sur des données CRC est plus grand que la moitié du nombre de bits minimum nécessaire et plus petit que le nombre de bits minimum nécessaire.

2. Dispositif ( 1, 5 ) suivant l'une des revendications précédentes, dans lequel le dispositif ( 1, 5 ) est un appareil électrique dans la technique d'automatisation industrielle et les télégrammes sécurisés sont des PROFIsafe ou des AS-i Safety at Work Telegramme.

3. Système de bus ayant un bus de communication et deux dispositifs ( 1, 5 ) suivant la revendication 1 ou 2, dans lequel les deux dispositifs ( 1, 5 ) peuvent échanger entre eux des télégrammes sécurisés par le bus ( 1, 5 ) de communication.

4. Procédé d'émission et de réception d'un télégramme sécurisé dans un système de bus, un télégramme sécurisé comprenant respectivement des données utiles et des données CRC, un dispositif ( 1, 5 ) raccordé au système de bus déterminant, au moyen d'un contrôle CRC, un taux d'erreur dans ces télégrammes sécurisés reçus, un dépassement d'une valeur de seuil de taux d'erreur mémorisé dans le dispositif ( 1, 5 ) mettant le dispositif ( 1, 5 ) dans un état sécurisé, dans lequel, en fonction du bus ( 2 ) de communication utilisé, une probabilité d'erreur de bits à attendre pour la communication par le bus ( 2 ) de communication est calculée, dans lequel il est obtenu, simplement en tenant compte de la probabilité d'erreur de bits à attendre du bus ( 2 ) de communication utilisé, un nombre de bits nécessaire minimum sur les données CRC pour chaque télégramme sécurisé à envoyer afin d'assurer une communication sécurisée par le bus de communication, **caractérisé en ce que** l'on mémorise dans le dispositif ( 1, 5 ) un procédé de calcul CRC dans lequel le nombre de bits sur des données CRC pour un télégramme à envoyer est plus grand que la moitié du nombre de bits minimum nécessaire et plus petit que le nombre de bits minimum nécessaire.

5. Procédé suivant la revendication 4, dans lequel un télégramme reçu et envoyé met à disposition un nombre fixe de bits ensemble pour les données utiles et les données CRC.
